# EUROPEAN PATENT APPLICATION

(11) **EP 2 492 155 A1**
(43) Date of publication of application: **29.08.2012**
(21) Application number: 11001612.8
(22) Date of filing: 28.02.2011
(51) Int. Cl.: B60R 21/36

(54) **Pedestrian protection airbag for a windshield of a vehicle**

(71) Applicant: Autoliv Development AB, 44783 Vårgårda (SE)
(72) Inventor: Pretot, Stephane, 44332 Lerum (SE)
(74) Representative: Müller Verweyen

(57) **Abstract**

The invention relates to a pedestrian protection airbag (PPA) (1) for a windshield (14) of a vehicle to be arranged under a rear section of a hood (18) adjacent to the windshield (14) of the vehicle, wherein the PPA (1) comprises a main chamber (10) and an inlet section (11) for inflating the PPA (1) by a gas flow generated by a gas generator (8), wherein the main chamber (10) is rolled or folded to a tubular shape, wherein the rolled or folded main chamber (10) is folded backwards onto the inlet section (11).

## Description

The invention relates to a pedestrian protection airbag for a windshield of a vehicle comprising the features of the preamble of claim 1.

The purpose of using a pedestrian protection airbag for a windshield of a vehicle is to protect pedestrians or bicycle drivers in the event of an accident against hitting onto the windshield and to thereby prevent severe injuries. The pedestrian protection airbag (PPA) must cover the windshield itself especially the lower half of the windshield as well as at least portions of the A-Pillars of the vehicle structure in the inflated state, onto which the pedestrian or the bicycle driver would impact.

The PPA is folded into a module and mounted under the rear part of a hood, which is directed towards the windshield. When actuated the PPA is inflated upwards through the gap between the hood and the windshield. The vehicle can be provided additionally with a hood lifter which lifts the rear end of the hood adjacent to the windshield, so that the gap between the hood and the windshield is increased.

One problem to be solved is that the inflation of the PPA shall not be disturbed by the wiper device, which is located in the park position at the lower section of the windshield or under the rear part of the hood adjacent to the windshield. Moreover, it is possible that not only the inflation of the PPA is disturbed by the wiper device, it may also happen that the wiper device itself is damaged by the inflating PPA.

With respect to the described background it is the object of the invention to provide a pedestrian protection airbag which can be inflated with a reduced risk of a collision with the wiper device.

According to the inventive solution, it is suggested that the rolled or folded main chamber of the PPA is folded backwards onto the inlet section of the PPA.

The advantage of the suggested solution is that the main chamber is lifted in a first step by unfolding the fold between the inlet section and the main chamber. As the main chamber is folded backwards, this movement is a pure lifting movement independent of the rolling or folding design of the main chamber. The unfolding or unrolling of the main chamber starts after the lifting movement, so that the inflation of the main chamber starts at a height where the likelihood that the main chamber collides with the wiper device during the inflation is at least reduced. The main chamber is inflated over the wiper device, so that the wiper device is also covered by the main chamber after the inflation, so that the pedestrian may not impact directly onto the wiper device.

Furthermore, it is suggested that the main chamber is folded onto the inlet section in a fold which is directed to the side of the PPA facing the windshield. The advantage of the suggested direction of the fold can be seen in that the main chamber is moved during the lifting movement also in a pivoting movement towards the windshield, so that the main chamber is at the beginning of the inflation in a closer position to the windshield.

Another preferred embodiment of the invention can be provided when the main chamber is rolled or folded to a tubular shape having an open slit which is directed towards the windshield. The advantage of the suggested orientation of the slit is that the main chamber is inflated with a permanent contact of the tubular main chamber at the unrolling circumference with the windshield, so that the main chamber is pressed onto the windshield during the inflation.

Moreover, it is suggested that the fold got a length of approximately the half of the outer diameter of the tubular shaped main chamber. The advantage of the suggested length of the fold is that the lifting movement can be extended to a maximum height without enlarging the outer dimensions of the airbag.

A reasonable package of the PPA can be further provided when the fold is arranged between the main chamber and a gas generator, wherein it is further assured by the suggested solution that the fold is unfolded automatically prior to the inflation of the main chamber.

Another preferred embodiment of the invention can be seen in that the main chamber is rolled or folded in a first step to a tubular shape and in a second step at least at one end at an angle, preferably perpendicular, to the length axis of the tubular main chamber to shorten the length before folding the main chamber backwards onto the inlet section. The PPA can be therefore folded to a shorter package which is easier to arrange under the hood, wherein the main chamber is lifted in a fist step in the shortened shape as a package before unrolling or unfolding the main chamber in a second step sidewise and subsequently in a third step towards the windshield.

It has been shown from different tests that the collision with the wiper device can be reasonably prevented without enlarging the PPA when the fold got a length of approximately 7-15 cm.

In the following, the invention shall be illustrated on the basis of preferred embodiments with reference to the accompanying drawings, wherein:
- Fig. 1: shows a pedestrian protection airbag (PPA) unfolded or unrolled;
- Fig. 2: shows a pedestrian protection airbag (PPA) in cross section with a housing and a gas generator;
- Fig. 3: shows a pedestrian protection airbag (PPA) adjacent to a windshield;
- Fig. 4: shows a pedestrian protection airbag (PPA) adjacent to a windshield prior to the inflation in cross section;
- Fig. 5: shows a pedestrian protection airbag (PPA) adjacent to a windshield after unfolding the fold between the inlet section and the main chamber in cross section;
- Fig. 6: shows a pedestrian protection airbag (PPA) adjacent to a windshield with a main chamber inflating over a wiper device in cross section.

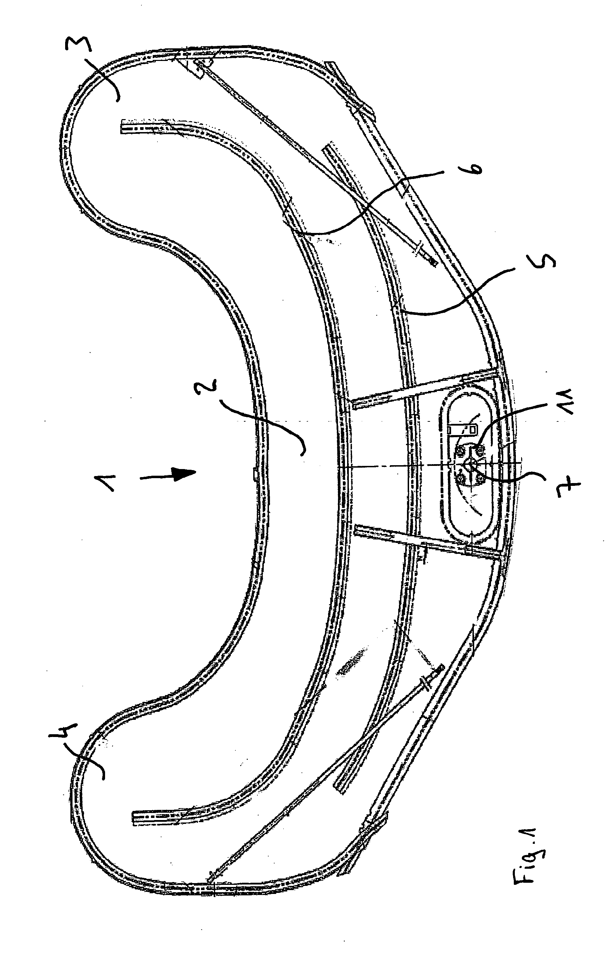

In figure 1 it is shown a pedestrian protection airbag (PPA) 1 with a central section 2 and two side sections 3 and 4 extending sideways and upwards from the central section 2. The central and side sections 2,3 and 4 are made of two fabric layers which are made as separate layers or in a one piece woven technology and define the inflatable portion of the PPA 1, hereinafter also called as main chamber 10. The PPA 1 is subdivided by two seams 5 and 6 which are connecting both fabric layers to create separated sub chambers which are in a fluidic connection. The shape of the seams 5 and 6 and the shape of the sub chambers are important features to control the inflation characteristic and the final shape of the PPA 1. Furthermore, the PPA 1 is provided with an inlet section 11 having a central opening 7.

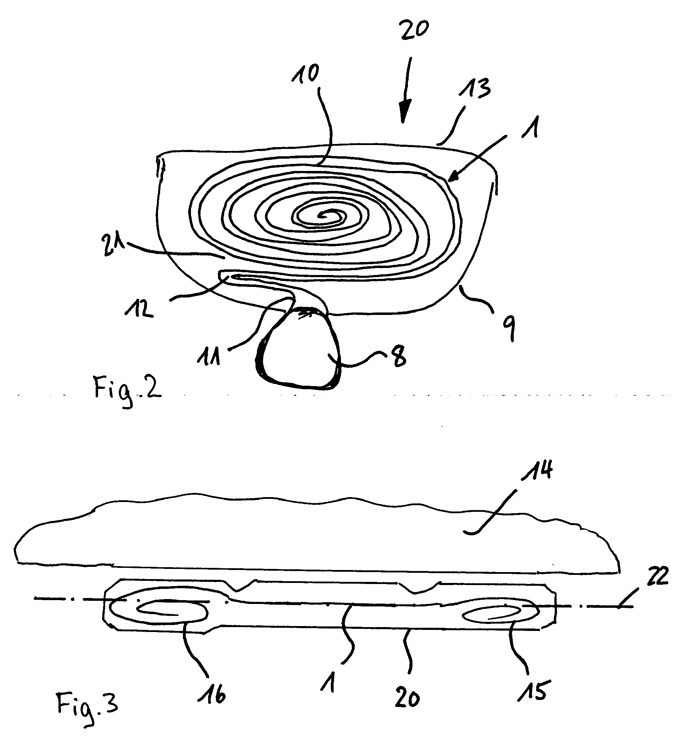

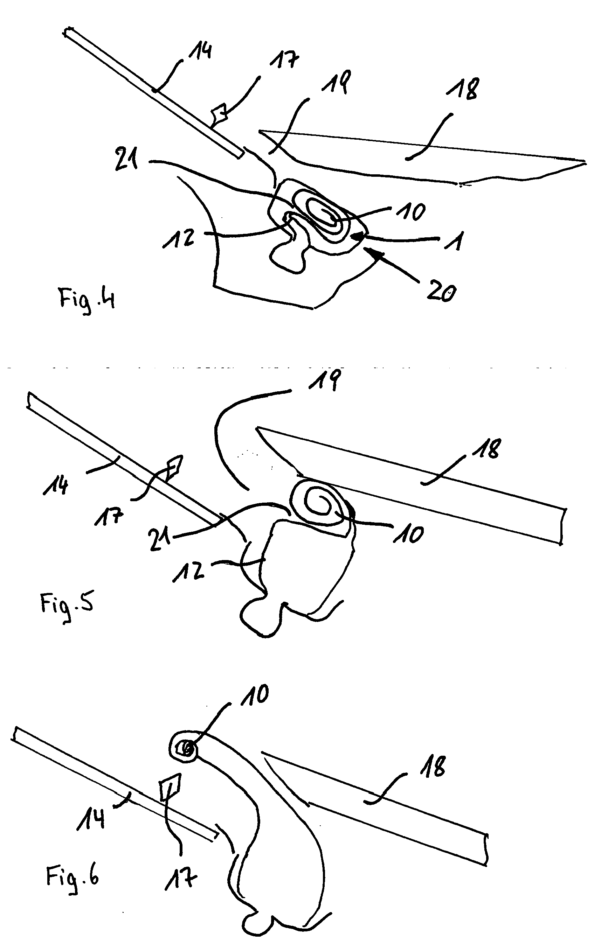

In the figures 2 and 3 is shown a module 20 comprising a housing 9, a cover 13, a gas generator 8 and a rolled or folded PPA 1 in different views in cross section. The module 20 is mounted adjacent to a windshield 14 under the rear end of a hood 18 as shown in the figures 4,5 and 6.

The PPA 1 is connected via the inlet section 11 to the gas generator 8 which is fixed at the housing 9. The gasgenerator 8 might be also adapted by a throat connected to one fabric layers of the PPA1, so that the gas stream generated by the gasgenerator 8 is guided from one side of the PPA 1 into the main chamber 10. The advantage of this solution is that the main chamber 10 or another inflatable section of the PPA 1 can be fixed at the housing 9 to provide a further control of the inflation characteristic. Furthermore the gas stream guided from a side into the PPA 1 effects an upward directed impulse which further prevents a collision of the inflating PPA 1 with a later described wiper device 17. The main chamber 10 consisting of the central and side sections 2,3 and 4 of the PPA 1 is rolled counterclockwise and folded finally backwards onto the inlet section 11 in the fold 12. The main chamber 10 is provided in the rolled state with an open slit 21 oriented to the same side like the fold 12, which will be in the mounted position the side of the PPA 1 facing the windshield 14. The fold 12 should have a dimension close to the half of the outer diameter of the tubular shaped main chamber 10 using the maximum available space in the housing 9 to enable a maximum height of the later described lifting movement.

In figure 3 the PPA 1 is visible with sideways and at an angle to the length axis 22 of the PPA 1 rolled sections 15 and 16 to shorten the length of the PPA 1 and the length of the module 20. The rolling angle of the sections 15 and 16 must be understood in that way that the sections 15 and 16 are rolled or folded around an axis which is arranged at an angle to the length axis 22 of the module 20.

In figure 4 it is shown the module 20 with the therein arranged PPA 1 under the rear end of the hood 18 adjacent to the lower rim of the windshield 14. On the top surface of the windshield 14 is abutting a wiper device 17 in the parking position. The hood 18 and the windshield 14 are arranged with a gap 19 to each other, through which the PPA 1 will be finally inflated towards the windshield 14 like explained in the following. The PPA 1 is rolled in the shown cross section counterclockwise with an open slit 21 directed towards the windshield 14 and folded backwards onto the inlet section 11 in a fold 12 which is also directed towards the windshield 14.

In figure 5 it is shown the PPA 1 in an intermediate phase during the inflation. The PPA 1 was inflated in a first step by unfolding the fold 12 with releasing the cover 13 and lifting the main chamber 10. As the fold 12 is directed towards the windshield 14 prior to the unfolding the main chamber 10 is not only lifted but also pivoted or turned towards the windshield 14. The hood 18 was lifted at the same time or a short time before by a not shown hood lifter, so that the gap 19 is enlarged up to a width enabling a further inflation of the main chamber 10 towards the windshield 14 as shown in figure 6.

The fold 12 got the purpose that the main chamber 10 is lifted in an early phase out of the housing 9 before the inflation of the main chamber 10 starts.

Because of the lifting movement the main chamber 10 is at the beginning of the inflation already in a lifted position, so that the inflating unrolling main chamber 10 does not collide with the wiper device 17 as shown in figure 6.

As the rolled sections 15 and 16 are rolled after rolling the main chamber 10 but before folding back the main chamber 10 also the sidewise directed inflation/unrolling starts after lifting the main chamber 10.

## Claims

1. Pedestrian protection airbag (PPA) (1) for a windshield (14) of a vehicle to be arranged under a rear section of a hood (18) adjacent to the windshield (14) of the vehicle, wherein the PPA (1) comprises a main chamber (10) and an inlet section (11) for inflating the PPA (1) by a gas flow generated by a gas generator (8), wherein the main chamber (10) is rolled or folded to a tubular shape, **characterized in that** the rolled or folded main chamber (10) is folded backwards onto the inlet section (11).

2. Pedestrian protection airbag (PPA) (1) according to claim 1, **characterized in that** the main chamber (10) is folded onto the inlet section (11) in a fold (12) which is located on the side of the PPA (1) facing the windshield (14).

3. Pedestrian protection airbag (PPA) (1) according to any one of the preceding claims, **characterized in that** the main chamber (10) is rolled or folded to a tubular shape having an open slit (21) which is directed towards the windshield (14).

4. Pedestrian protection airbag (PPA) (1) according to any one of the preceding claims, **characterized in that** the fold (12) got a length of approximately the half of the outer diameter of the tubular shaped main chamber (10).

5. Pedestrian protection airbag (PPA) (1) according to any one of the preceding claims, **characterized in that** the fold (12) is arranged between the main chamber (10) and a gas generator (8).

6. Pedestrian protection airbag (PPA) (1) according to any one of the preceding claims, **characterized in that** the main chamber (10) is rolled or folded in a first step to a tubular shape and in a second step at least at one end at an angle, preferably perpendicular, to the length axis of the tubular main chamber (10) to shorten the length of the PPA (1) before folding the main chamber (10) backwards onto the inlet section (11).

7. Pedestrian protection airbag (PPA) (1) according to any one of the preceding claims, **characterized in that** the fold (12) got a length of approximately 7-15 cm.

8. Module (20) comprising a housing (9), a cover (13) and a gas generator (8), **characterized in that** the module (20) contains a pedestrian protection airbag (PPA) (1) according to one of the claims 1 to 7, wherein the gas generator (8) and the inlet section (11) are fixed at the housing (9).
